# EUROPEAN PATENT APPLICATION

(11) **EP 4 832 211 A1**
(43) Date of publication of application: **28.10.2026**
(21) Application number: 24905411.5
(22) Date of filing: 15.05.2024
(51) Int. Cl.: H01M 50/30

(54) **BATTERY AND BATTERY PACK**

(30) Priority: 22.12.2023 CN 202311780860
(71) Applicant: SVOLT Energy Technology Co., Ltd., Changzhou, Jiangsu 213200 (CN)
(72) Inventor: ZHANG, Shuang, hangzhou, Jiangsu 213200 (CN); YUAN, Yuan, hangzhou, Jiangsu 213200 (CN); LIU, Changhui, hangzhou, Jiangsu 213200 (CN); HU, Weidong, hangzhou, Jiangsu 213200 (CN); SU, Shufa, hangzhou, Jiangsu 213200 (CN); ZHOU, Jie, hangzhou, Jiangsu 213200 (CN)
(74) Representative: Michalski Hüttermann & Partner mbB
(86) International application number: PCT/CN2024/093447
(87) International publication number: WO 2025/129907

(57) **Abstract**

The present invention discloses a battery and a battery pack. The battery includes a housing, an electrode assembly, an explosion-proof valve, and a pressure relief channel, wherein an actual equivalent sectional area S of the pressure relief channel satisfies: S _> (S₁S₂)/(nS₀), and nS₀ ≥ S₁, where S₁ is a total area of the explosion-proof valves, S₂ is a theoretical equivalent sectional area of the pressure relief channel, n is a quantity of the explosion-proof valves, and S₀ is an actual area of the explosion-proof valves.

## Description

### CROSS-REFERENCE TO THE RELATED APPLICATIONS

The present disclosure claims priority to Chinese Patent Application No. 202311780860.7, filed with the China National Intellectual Property Administration on December 22, 2023 and entitled "BATTERY AND BATTERY PACK", the entire contents of which are incorporated herein by reference.

### TECHNICAL FIELD

Embodiments of the present disclosure relate to, but are not limited to, the field of battery technologies.

### BACKGROUND

As lithium-ion battery technology becomes increasingly mature, lithium-ion batteries are more and more widely used as power batteries in electric vehicles and energy storage fields. The structural strength and safety performance of a lithium-ion battery cell are extremely important for safe operation of the cell. The design of energy and substance discharge channels, such as the design of a pressure relief valve, plays a very crucial role in preventing fire and explosion of the battery. In addition, merely having a pressure relief valve design is insufficient; it is also necessary to ensure that internal substances flow smoothly to the pressure relief valve and that the channel is not narrowed during the pressure relief process.

### SUMMARY

In one aspect, the present disclosure provides a battery, including:
a housing, wherein the housing includes two first sidewalls, a second sidewall connecting the two first sidewalls, and a third sidewall connecting the two first sidewalls and the two second sidewalls; the first sidewalls, the second sidewall, and the third sidewall are enclosed to form an accommodating cavity; and the second sidewall and/or the third sidewall is provided with explosion-proof holes, and the explosion-proof holes are in communication with the accommodating cavity;
an electrode assembly, wherein the electrode assembly is disposed in the accommodating cavity, the electrode assembly is spaced apart from the second sidewall and/or the third sidewall to form a pressure relief channel in the accommodating cavity; and
explosion-proof valves, the explosion-proof valves are disposed on the second sidewall and/or the third sidewall,
wherein an actual equivalent sectional area S of the pressure relief channel satisfies:
   $S \geq \left({S}_{1}{S}_{2}\right) / \left({nS}_{0}\right) , and {nS}_{0} \geq {S}_{1} ,$
where S₁ is a total area of the explosion-proof valves, S₂ is a theoretical equivalent sectional area of the pressure relief channel, n is a quantity of the explosion-proof valves, and S₀ is an actual area of the explosion-proof valve.

In some embodiments, the total area S₁ of the explosion-proof valves satisfies:${S}_{1} = αCV ,$
where C is a rated capacity of the battery, V is a rated voltage of the battery, and α is an area coefficient of the explosion-proof valve.

In some embodiments, the theoretical equivalent sectional area S₂ of the pressure relief channel satisfies:
${S}_{2} = {γS}_{1} ,$
where γ is an area coefficient of the pressure relief channel.

In some embodiments, the accommodating cavity has a length L, a width H, and a thickness T; and a total actual area of the explosion-proof valves satisfies:
${nS}_{0} < LT$

In some embodiments, the electrode assembly has a height h and a length l; and the actual equivalent sectional area S of the pressure relief channel satisfies:
$S = \left(HL-hl\right) T / \left(H+L\right) / 2 .$

In some embodiments, the battery includes a plurality of explosion-proof valves, and the plurality of explosion-proof valves are respectively disposed on the second sidewall and the third sidewall.

In some embodiments, the explosion-proof valves are disposed at a center of the second sidewall.

In some embodiments, the explosion-proof valves are symmetrically disposed on the second sidewall.

In some embodiments, the explosion-proof valves are disposed at a center of the third sidewall.

In some embodiments, the explosion-proof valves are symmetrically disposed on the third sidewall.

In some embodiments, the area coefficient α of the explosion-proof valve satisfies: 0.3 ≤ α ≤ 1.

In some embodiments, the equivalent sectional area coefficient γ of the pressure relief channel satisfies: 0.1 ≤ γ ≤ 0.5.

Further, the present disclosure also provides a battery pack, including the battery according to any one of the above embodiments.

Details of one or more embodiments of the present disclosure are set forth in the drawings and the description below. Other features, objectives, and advantages of the present disclosure will become apparent from the specification, the drawings, and the claims.

### BRIEF DESCRIPTION OF THE DRAWINGS

The technical solutions and other beneficial effects of the present disclosure will become apparent from the following detailed description of specific embodiments of the present disclosure in conjunction with the drawings.
FIG. 1 is a schematic diagram of an external structure of a battery provided by an embodiment of the present disclosure;
FIG. 2 is a front view of a battery provided by an embodiment of the present disclosure;
FIG. 3 is a side view of a battery provided by an embodiment of the present disclosure;
FIG. 4 is a front sectional view of a battery provided by an embodiment of the present disclosure;
FIG. 5 is a side sectional view of a battery provided by an embodiment of the present disclosure;
FIG. 6 is a front sectional view of a battery provided by another embodiment of the present disclosure;
FIG. 7 is a front sectional view of a battery provided by another embodiment of the present disclosure;
FIG. 8 is a front sectional view of a battery provided by another embodiment of the present disclosure;
FIG. 9 is a front sectional view of a battery provided by another embodiment of the present disclosure;
FIG. 10 is a front sectional view of a battery provided by another embodiment of the present disclosure;
FIG. 11 is a front sectional view of a battery provided by another embodiment of the present disclosure;
FIG. 12 is a front sectional view of a battery provided by another embodiment of the present disclosure; and
FIG. 13 is a front sectional view of a battery provided by another embodiment of the present disclosure.

Reference numerals:
10-housing, 101-first sidewall, 102-second sidewall, 103-third sidewall, 104-accommodating cavity, 20-electrode assembly, 30-pressure relief channel, 40-explosion-proof valve, 50-tab.

### DETAILED DESCRIPTION OF THE EMBODIMENTS

The technical solutions in embodiments of the present disclosure will be described clearly and completely below with reference to the drawings in the embodiments of the present disclosure. Obviously, the described embodiments are merely a part of the embodiments of the present disclosure, rather than all embodiments. All other embodiments obtained by a person of ordinary skill in the art based on the embodiments of the present disclosure without inventive efforts shall fall within the protection scope of the present disclosure.

The disclosure below provides many different embodiments or examples for implementing different structures of the present disclosure. To simplify the disclosure of the present disclosure, specific examples of components and settings are described below. Of course, they are merely examples, and are not intended to limit the present disclosure.

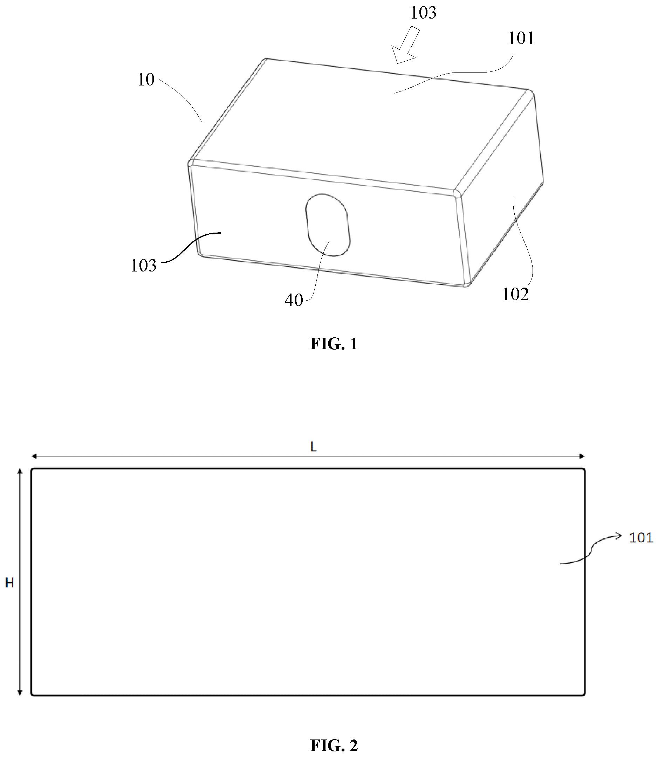

An embodiment of the present disclosure provides a battery, including a housing 10. As shown in FIG. 1, the housing 10 includes two first sidewalls 101, a second sidewall 102 connecting the two first sidewalls 101, and a third sidewall 103 connecting the two first sidewalls 101 and the two second sidewalls 102. The first sidewalls 101, the second sidewall 102, and the third sidewall 103 are enclosed to form an accommodating cavity 104.

The accommodating cavity 104 of the housing 10 has a length L, a width H, and a thickness T. As shown in FIGS. 2-3, it can be understood that, in some embodiments, the first sidewalls 101, the second sidewall 102, and the third sidewall 103 are rectangular, a long side of an inner surface of the first sidewall 101 has the length L, and a short side has the width H; and based on the same principle, a short side of an inner surface of the second sidewall 102 has the thickness T.

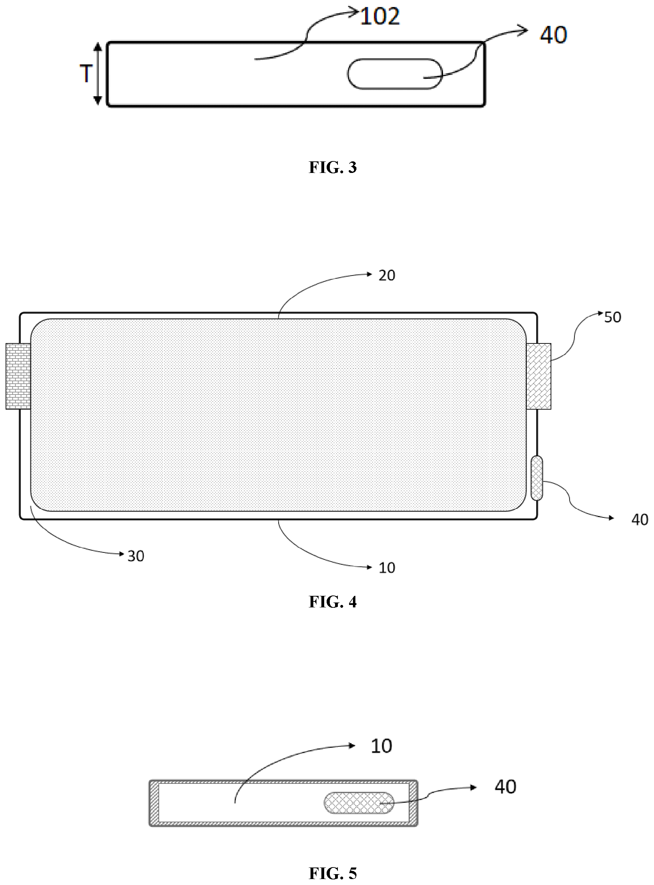

As shown in FIG. 4, the battery in the embodiment of the present disclosure further includes an electrode assembly 20, the electrode assembly 20 is disposed in the accommodating cavity 104, and an outer wall of the electrode assembly 20 and an inner wall of the second sidewall 102 have a certain spacing, to form an annular pressure relief channel 30 in the accommodating cavity 104.

The second sidewall 102 and/or the third sidewall 103 has explosion-proof holes, and is connected with the pressure relief channel 30 to form a passage. The explosion-proof valves 40 are correspondingly disposed on the second sidewall 102 and/or the third sidewall 103, and cover and seal the explosion-proof holes. The explosion-proof holes are structures disposed on a surface of or penetrating through the second sidewall 102 and/or the third sidewall 103, and a shape thereof can be a circular hole, a square hole, a mesh-shaped hole, or an annular score line.

When the battery undergoes thermal runaway, generated gas and heat flow through the pressure relief channel 30 to reach the explosion-proof valves 40, and are finally discharged from the housing 10 through the explosion-proof valves 40.

The battery in the embodiment of the present disclosure further includes a tab 50, the tab 50 is disposed on the second sidewall 102 and/or the third sidewall 103 of the housing 10, and the tab 50 can be on a same plane as the explosion-proof valve 40, or can be on a different plane from the explosion-proof valve 40.

The actual equivalent sectional area S of the pressure relief channel 30 satisfies:
$S \geq \left({S}_{1}{S}_{2}\right) / \left({nS}_{0}\right) , and {nS}_{0} \geq {S}_{1} ,$
where S₁ is the total area of the explosion-proof valves 40, S₂ is the theoretical equivalent sectional area of the pressure relief channel 30, n is the quantity of the explosion-proof valves 40, and S₀ is the actual area of the explosion-proof valve 40.

As a pressure relief mechanism in the battery, if the sectional area of the pressure relief channel 30 is too small, substances and heat released by the battery can easily accumulate and block, leading to housing rupture; and if the sectional area of the pressure relief channel 30 is too large, the overall strength of the battery can easily be affected, causing the battery to collapse easily during operation. During the pressure relief process of the battery, the cooperation between the explosion-proof valves 40 and the pressure relief channel 30 is particularly important. By relating the actual equivalent sectional area S of the pressure relief channel 30 to the quantity n of the explosion-proof valves 40 and the area S₀ of each explosion-proof valve 40, the overall pressure relief mechanism can complete pressure relief as efficiently as possible when the battery undergoes thermal runaway, while ensuring that the battery has ideal strength to maintain normal operation.

The battery provided by the present disclosure establishes a relationship among the quantity of explosion-proof valves, the area of the explosion-proof valves, and the dimension of the pressure relief channel, determines an equivalent sectional area of the internal pressure relief channel through the quantity and the area of the explosion-proof valves, enables the design of the battery to be more reasonable. When thermal runaway occurs, directional pressure relief can be effectively performed, so that gas does not accumulate and block but is discharged in a timely manner after vigorous gas generation inside the battery, solving safety problems such as housing rupture and explosion caused by vigorous gas generation during thermal runaway of the battery.

S₁ is the total area of the explosion-proof valves 40, and it can be understood that, as a design value, S₁ represents a theoretically required minimum total area value of the explosion-proof valves 40 based on factors such as positive and negative electrode active material properties, gas generation amount, and gas generation rate of a battery. Therefore, in actual production, only when an actual total area value of the explosion-proof valves 40, i.e., nS₀, is greater than or equal to the theoretically required minimum total area value S₁ of the explosion-proof valves 40, can it be ensured that the safety valve 40 can open normally to perform pressure relief when the battery undergoes thermal runaway.

In some embodiments, the total area S₁ of the explosion-proof valves 40 satisfies:
${S}_{1} = αCV ,$
where C is the rated capacity of the battery, V is the rated voltage of the battery, and α is the area coefficient of the explosion-proof valve 40.

Optionally, the area coefficient α of the explosion-proof valve 40 satisfies: 0.3 ≤ α ≤ 1. It can be understood that the value of α can be any one of 0.1, 0.4, 0.5, 0.6, 0.7, 0.8, 0.9, and 1, or a range between any two values.

In some embodiments, the theoretical equivalent sectional area S₂ of the pressure relief channel 30 satisfies:
${S}_{2} = {γS}_{1} ,$
where γ is the area coefficient of the pressure relief channel 30.

Optionally, the equivalent sectional area coefficient γ of the pressure relief channel 30 satisfies: 0.1 ≤ γ ≤ 0.5. It can be understood that the value of γ can be any one of 0.1, 0.2, 0.3, 0.4, and 0.5, or a range between any two values.

Specifically, for different active material systems, gas generation amounts, and gas generation rates, value ranges of the area coefficient α of the explosion-proof valve 40 and the equivalent sectional area coefficient γ of the pressure relief channel 30 are shown in Table 1.

**Table 1**

| Material system | Sodium-ion battery system | Lithium solid-state | Lithium condensed state or semi-solid state | Energy storage LFP | Power LFP | M₃P or lithium iron phosphate-based salt | Low/medium nickel | High nickel/silicon-doped |
|---|---|---|---|---|---|---|---|---|
| Gas generation amount (L/Ah) | 0.4 to 0.6 | 0.3 to 0.8 | 0.4 to 1.2 | 0.5 to 0.8 | 0.6 to 1.2 | 0.6 to 1.4 | 1.2 to 1.6 | 1.5 to 1.8 |
| α value range | 0.3 to 0.5 | 0.3 to 0.6 | 0.3 to 0.7 | 0.3 to 0.6 | 0.4 to 0.7 | 0.4 to 0.8 | 0.6 to 0.9 | 0.7 to 1.0 |
| Gas generation rate (L/Ah/s) | 0.01 to 0.04 | 0.05 to 0.1 | 0.05 to 0.12 | 0.01 to 0.06 | 0.01 to 0.06 | 0.02 to 0.08 | 0.1 to 0.15 | 0.10 to 0.18 |
| γ value range | 0.1 to 0.2 | 0.15 to 0.5 | 0.2 to 0.5 | 0.1 to 0.3 | 0.1 to 0.3 | 0.1 to 0.35 | 0.25 to 0.5 | 0.25 to 0.5 |

When the area coefficient α of the explosion-proof valve 40 and the equivalent sectional area coefficient γ of the pressure relief channel 30 are selected according to the value ranges shown in Table 1, battery parameters finally obtained can ensure safety and stability of the battery.

In some embodiments, the total area S₁ of the explosion-proof valves 40 and the theoretical equivalent sectional area S₂ of the pressure relief channel 30 can reasonably exert a pressure relief effect for battery cells with different characteristics.

In some embodiments, the total actual area of the explosion-proof valves 40 and the dimension of the housing 10 satisfy:
${nS}_{0} < LT .$

It can be understood that, when the battery is a cuboid or a similar cuboid, LT can represent a minimum second sidewall 102 area among four second sidewalls 102 of the housing 10. If an actual total area of the explosion-proof valves 40 is too large, the overall strength of the housing 10 will be affected, causing the battery to collapse and deform easily during normal operation. Therefore, when the relationship between the actual total area of the explosion-proof valves 40 and the dimension of the housing 10 satisfies the above relationship, the overall strength of the battery can be ensured, and stable operation of the battery is maintained.

Optionally, the electrode assembly 20 has the height h and the length l, and the actual equivalent sectional area S of the pressure relief channel 30 can be calculated through the above parameters:
$S = \left(HL-hl\right) T / \left(H+L\right) / 2 .$

In some embodiments, the battery includes a plurality of explosion-proof valves 40, the explosion-proof valves 40 can be disposed on at least one second sidewall 102, or can be disposed on at least one third sidewall 103, or can be simultaneously disposed on the second sidewall 102 and the third sidewall 103.

For different battery systems, the required quantity n of the explosion-proof valves 40 varies. For example, for a battery of an LFP system with less gas generation, only one explosion-proof valve 40 is needed to meet the pressure relief demand; while for different systems, or batteries with a same dimension but large gas generation amount and fast gas generation rate, two or more explosion-proof valves 40 can be disposed according to requirements of an actual scenario.

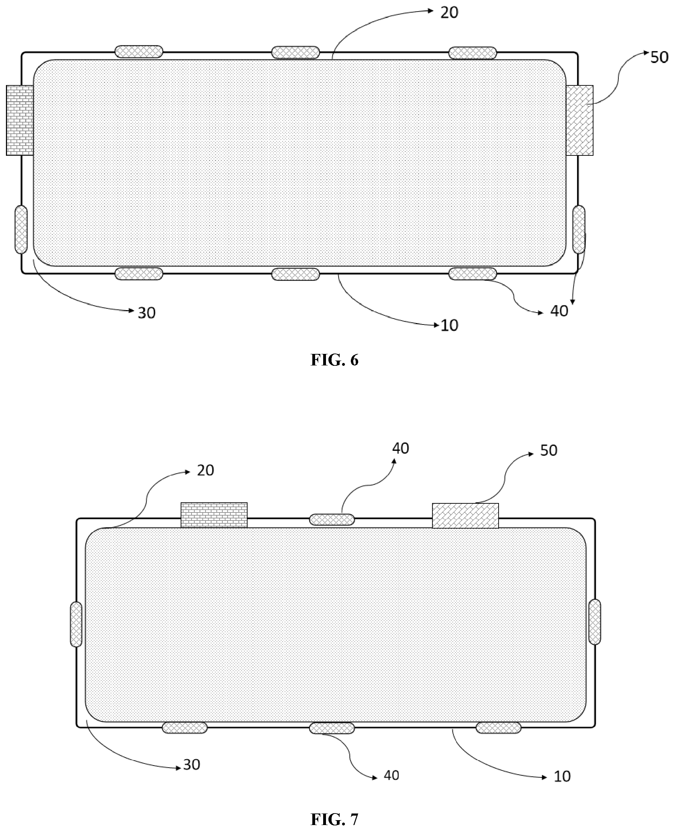

In some embodiments, as shown in FIG. 6, when the battery has a plurality of explosion-proof valves 40, the explosion-proof valves 40 can be respectively disposed on the second sidewall 102 and the third sidewall 103 of the housing 10. Since the pressure relief channel 30 is annular, disposing the plurality of explosion-proof valves 40 on both the second sidewall 102 and the third sidewall 103 simultaneously enables exhaust paths formed by connecting the explosion-proof valves 40 and the pressure relief channel 30 to be more uniform, which can more effectively and rapidly exhaust gas and heat released by the cell.

In some embodiments, as shown in FIG. 7, the explosion-proof valve 40 is disposed at the center of the second sidewall 102. The explosion-proof valve 40 is stably matched with the housing 10 by a top welding method (laser welding), and when the explosion-proof valve 40 is located at the center of the second sidewall 102, gas can be exhausted uniformly, providing a better pressure relief effect.

FIG. 7 also shows a method for disposing the explosion-proof valve 40 in another embodiment, that is, when a plurality of explosion-proof valves 40 are disposed on the third sidewall 103, the explosion-proof valves 40 are symmetrically disposed on the third sidewall 103. Based on a similar principle, when the explosion-proof valves 40 are symmetrically disposed on the third sidewall 103, gas can be exhausted uniformly, providing a better pressure relief effect.

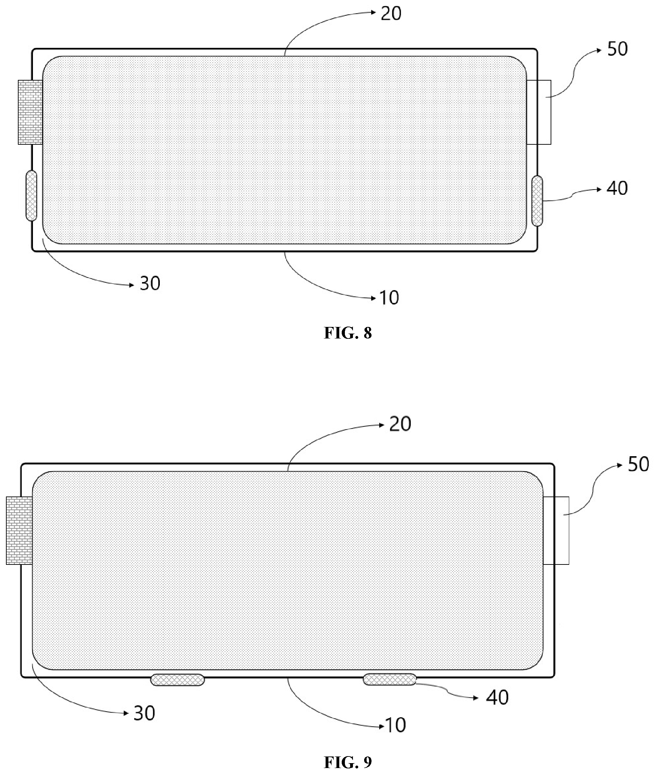

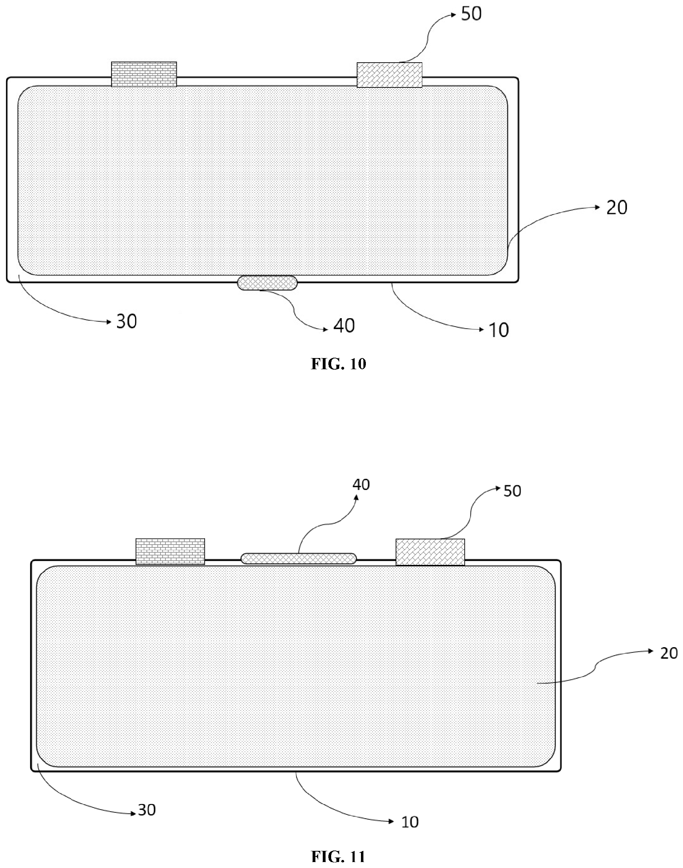

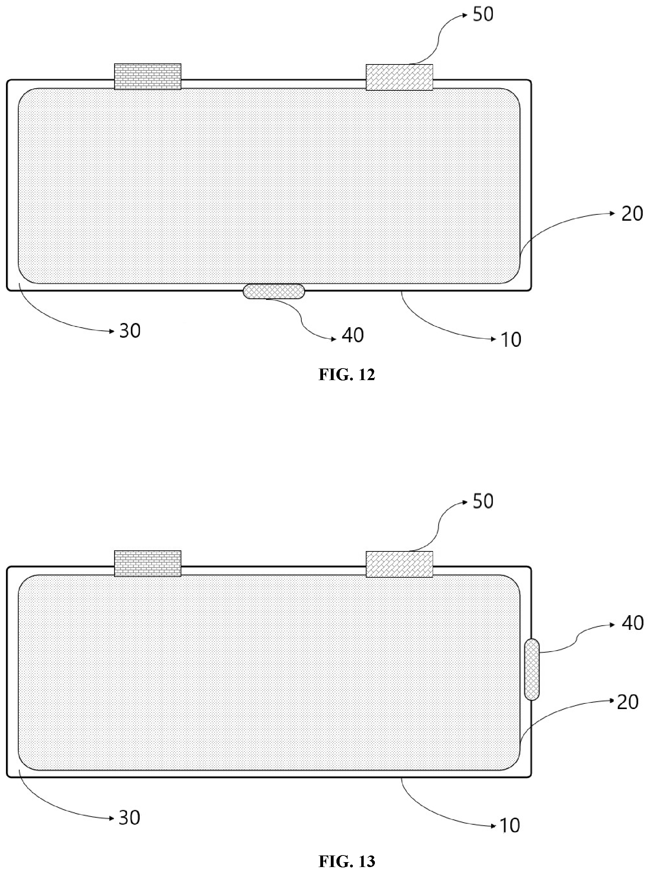

Referring to FIGS. 8-13, in actual production, the relative positions and quantity of the explosion-proof valve 40 and the tab 50 can be differently set according to different battery structures and systems. The explosion-proof valves 40 and the tab 50 can be symmetrically disposed on opposite second sidewalls 102 at the same time, as shown in FIG. 8; or the explosion-proof valves 40 can be disposed on the third sidewall 103 while the tab 50 is disposed on the second sidewall 102, as shown in FIG. 9, or the explosion-proof valves 40 and the tab 50 can be respectively disposed on different third sidewalls 103, as shown in FIG. 10; when there is only one explosion-proof valve 40, it can be disposed between the tabs 50, as shown in FIG. 11, or disposed on a third sidewall 103 different from the tab 50, as shown in FIG. 12; or the tab 50 can be disposed on the third sidewall 103 while the explosion-proof valve 40 is disposed on the second sidewall 102.

Further, an embodiment of the present disclosure also provides a battery pack, comprising the battery in any of the above embodiments.

The battery provided by the present disclosure is described below in conjunction with specific embodiments.

### Example 1

This example provides a battery, including:
a housing 10, as shown in FIG. 1, the housing 10 includes first sidewalls 101 and second sidewalls 102 connecting the first sidewalls 101, and the first sidewalls 101 and the second sidewalls 102 are enclosed to form an accommodating cavity 104.

As shown in FIGS. 2-3, the accommodating cavity of the housing 10 has a length L = 578 mm, a width H = 91 mm, and a thickness T = 15 mm.

The battery in the embodiment of the present disclosure further includes an electrode assembly 20, the electrode assembly 20 is disposed in the accommodating cavity 104, and an outer wall of the electrode assembly 20 and an inner wall of the second sidewall 102 have a certain spacing, so as to form an annular pressure relief channel 30 in the accommodating cavity 104.

The explosion-proof valve 40 is disposed on the second sidewall 102, and is connected with the pressure relief channel 30 to form a passage. Only one explosion-proof valve 40 is provided, an area S₀ of the explosion-proof valve 40 is 200 mm², and a distribution of the explosion-proof valves 40 is shown in FIG. 4.

The total area S₁ of the explosion-proof valves 40 is:
${S}_{1} = αCV = 95.7 {mm}^{2} ;$

The theoretical equivalent sectional area S₂ of the pressure relief channel 30 is:
${S}_{2} = {γS}_{1} = 19.1 {mm}^{2} ;$

The actual equivalent sectional area S of the pressure relief channel 30 is:
$S = \left(HL-hl\right) T / \left(H+L\right) / 2 = 29.7 ;$$\left({S}_{1}{S}_{2}\right) / \left({nS}_{0}\right) = 9.2 .$

The actual equivalent sectional area of the pressure relief channel 30 satisfies: 29.7 > 9.2, i.e., S > (S₁S₂)/(nS₀), and simultaneously satisfies S₁ ≤ nS₀ < LT.

The battery system and parameters in Example 1 are adjusted, and battery parameters involved are shown in Table 2.

**Table 2**

| System | Example | C (Ah) | V (V) | α | γ | H (mm) | L (mm) | T (mm) | h (mm) | l (mm) |
|---|---|---|---|---|---|---|---|---|---|---|
| Energy storage LFP | Example 1 | 100 | 3.19 | 0.3 | 0.10 | 91 | 578 | 15 | 90 | 555 |
| | Example 2 | 100 | 3.19 | 0.4 | 0.20 | 91 | 578 | 15 | 90 | 555 |
| | Example 3 | 100 | 3.19 | 0.5 | 0.10 | 91 | 578 | 15 | 89 | 570 |
| | Example 4 | 100 | 3.19 | 0.6 | 0.20 | 91 | 578 | 15 | 89 | 570 |
| | Comparative Example 1 | 100 | 3.19 | 0.6 | 0.30 | 91 | 578 | 15 | 89 | 566 |
| | Example 5 | 100 | 3.19 | 0.5 | 0.30 | 91 | 578 | 15 | 89 | 566 |
| | Example 6 | 170 | 3.2 | 0.4 | 0.20 | 117 | 575 | 21 | 115 | 546 |
| | Example 7 | 170 | 3.2 | 0.4 | 0.30 | 117 | 575 | 21 | 115 | 546 |
| Power LFP | Example 8 | 108 | 3.19 | 0.6 | 0.15 | 91 | 578 | 15 | 89 | 570 |
| | Example 9 | 108 | 3.19 | 0.5 | 0.10 | 91 | 578 | 15 | 89 | 570 |
| | Example 10 | 200 | 3.2 | 0.4 | 0.20 | 117 | 575 | 21 | 115 | 546 |
| | Example 11 | 200 | 3.2 | 0.4 | 0.30 | 117 | 575 | 21 | 115 | 546 |
| | Comparative Example 2 | 200 | 3.2 | 0.7 | 0.20 | 117 | 575 | 21 | 115 | 561 |
| | Example 12 | 200 | 3.2 | 0.6 | 0.20 | 117 | 575 | 21 | 115 | 561 |
| | Example 13 | 200 | 3.2 | 0.7 | 0.20 | 117 | 575 | 21 | 115 | 565 |
| | Comparative Example 3 | 200 | 3.2 | 0.7 | 0.30 | 117 | 575 | 21 | 115 | 565 |
| Low/medium nickel | Example 14 | 116 | 3.7 | 0.6 | 0.25 | 100 | 147 | 51 | 95 | 144 |
| | Example 15 | 116 | 3.7 | 0.7 | 0.30 | 100 | 147 | 51 | 95 | 144 |
| | Comparative Example 4 | 116 | 3.7 | 0.8 | 0.30 | 100 | 147 | 51 | 96 | 144 |
| | Comparative Example 5 | 116 | 3.7 | 0.8 | 0.30 | 100 | 147 | 51 | 96 | 144 |
| | Example 16 | 116 | 3.7 | 0.7 | 0.30 | 100 | 147 | 51 | 97 | 144 |
| | Comparative Example 6 | 116 | 3.7 | 0.8 | 0.40 | 100 | 147 | 51 | 97 | 144 |
| | Example 17 | 116 | 3.7 | 0.8 | 0.40 | 100 | 147 | 51 | 96 | 144 |
| | Example 18 | 116 | 3.7 | 0.9 | 0.50 | 100 | 147 | 51 | 96 | 144 |
| High nickel | Example 19 | 135 | 3.65 | 0.7 | 0.25 | 98 | 147 | 51 | 92 | 142 |
| | Example 20 | 135 | 3.65 | 0.8 | 0.35 | 98 | 147 | 51 | 92 | 142 |
| | Example 21 | 135 | 3.65 | 0.9 | 0.35 | 98 | 147 | 51 | 92 | 141 |
| | Comparative Example 7 | 135 | 3.65 | 0.9 | 0.40 | 98 | 147 | 51 | 92 | 141 |
| | Example 22 | 135 | 3.65 | 0.9 | 0.35 | 98 | 147 | 51 | 92 | 142 |
| | Comparative Example 8 | 135 | 3.65 | 1 | 0.50 | 98 | 147 | 51 | 92 | 142 |
| Sodium-ion battery | Example 23 | 85 | 3.5 | 0.4 | 0.15 | 99 | 147 | 51 | 97 | 145 |
| | Example 24 | 85 | 3.5 | 0.4 | 0.20 | 99 | 147 | 51 | 97 | 145 |
| | Example 25 | 85 | 3.5 | 0.4 | 0.15 | 99 | 147 | 51 | 98 | 145 |
| | Example 26 | 85 | 3.5 | 0.3 | 0.10 | 99 | 147 | 51 | 98 | 145 |
| | Comparative Example 9 | 85 | 3.5 | 0.4 | 0.15 | 99 | 147 | 51 | 98.5 | 146.5 |
| | Comparative Example 10 | 85 | 3.5 | 0.5 | 0.20 | 99 | 147 | 51 | 98.0 | 146 |
| High nickel/silicon-doped | Comparative Example 11 | 168 | 3.67 | 1 | 0.45 | 105 | 219 | 43 | 100 | 212 |
| | Example 27 | 168 | 3.67 | 0.9 | 0.30 | 105 | 219 | 43 | 100 | 212 |
| | Example 28 | 168 | 3.67 | 0.80 | 0.25 | 105 | 219 | 43 | 98 | 212 |
| | Example 29 | 168 | 3.67 | 0.80 | 0.45 | 105 | 219 | 43 | 98 | 212 |
| | Example 30 | 168 | 3.67 | 0.95 | 0.45 | 103 | 219 | 43 | 98 | 210 |
| | Example 31 | 168 | 3.67 | 0.7 | 0.50 | 103 | 219 | 43 | 98 | 210 |
| Lithium solid-state | Comparative Example 12 | 140 | 3.6 | 0.50 | 0.50 | 71 | 364 | 31 | 63 | 356 |
| | Example 32 | 140 | 3.6 | 0.30 | 0.50 | 71 | 364 | 31 | 63 | 356 |
| | Example 33 | 140 | 3.6 | 0.50 | 0.45 | 71 | 364 | 31 | 65 | 356 |
| | Example 34 | 140 | 3.6 | 0.40 | 0.25 | 71 | 364 | 31 | 65 | 356 |
| | Example 35 | 140 | 3.6 | 0.60 | 0.40 | 71 | 364 | 31 | 63 | 356 |
| | Example 36 | 140 | 3.6 | 0.60 | 0.15 | 71 | 364 | 31 | 63 | 356 |
| | Comparative Example 13 | 135 | 3.6 | 0.70 | 0.35 | 98 | 147 | 51 | 92 | 143 |
| | Example 37 | 135 | 3.6 | 0.70 | 0.20 | 98 | 147 | 51 | 92 | 143 |
| Lithium condensed state | Example 38 | 135 | 3.6 | 0.50 | 0.40 | 98 | 147 | 51 | 92 | 143 |
| | Example 39 | 135 | 3.6 | 0.30 | 0.50 | 98 | 147 | 51 | 92 | 143 |
| | Example 40 | 135 | 3.6 | 0.50 | 0.35 | 98 | 147 | 51 | 92 | 141 |
| | Example 41 | 135 | 3.6 | 0.60 | 0.35 | 98 | 147 | 51 | 92 | 141 |
| | Example 42 | 135 | 3.6 | 0.70 | 0.35 | 98 | 147 | 51 | 92 | 143 |
| | Example 43 | 135 | 3.6 | 0.40 | 0.30 | 98 | 147 | 51 | 92 | 143 |

Thermal runaway experiments were performed on the batteries of Examples 1 to 17 and Comparative Examples 1 to 11, and the number of times the housing 10 ruptured was recorded. The results are shown in Table 3.

**Table 3**

| System | Example | S₁ (mm²) | S₂ (mm²) | S₀ (mm²) | n | (S₁S₂)/(nS₀) | S (mm²) | Design evaluation | Casing cracking |
|---|---|---|---|---|---|---|---|---|---|
| Energy storage LFP | Example 1 | 95.7 | 9.6 | 200.0 | 1 | 4.6 | 29.7 | Reasonable | 0/3 |
| | Example 2 | 127.6 | 25.5 | 200.0 | 1 | 16.3 | 29.7 | Reasonable | 0/3 |
| | Example 3 | 159.5 | 16.0 | 300.0 | | 4.2 | 20.9 | Reasonable | 0/3 |
| | Example 4 | 191.4 | 38.3 | 300.0 | 2 | 12.2 | 20.9 | Reasonable | 0/3 |
| | Comparative Example 1 | 191.4 | 57.4 | 400.0 | 1 | 27.5 | 24.9 | Unreasonable | 1/3 |
| | Example 5 | 159.5 | 47.9 | 400.0 | 1 | 19.1 | 24.9 | Reasonable | 0/3 |
| | Example 6 | 217.6 | 43.5 | 300.0 | 1 | 31.6 | 68.1 | Reasonable | 0/3 |
| | Example 7 | 217.6 | 65.3 | 300.0 | 1 | 47.3 | 68.1 | Reasonable | 0/3 |
| Power LFP | Example 8 | 206.712 | 31.0 | 400.0 | 1 | 16.0 | 20.9 | Reasonable | 0/3 |
| | Example 9 | 172.26 | 17.2 | 400.0 | 1 | 7.4 | 20.9 | Reasonable | 0/3 |
| | Example 10 | 256 | 51.2 | 400.0 | 2 | 16.4 | 68.1 | Reasonable | 0/3 |
| | Example 11 | 256 | 76.8 | 400.0 | 2 | 24.6 | 68.1 | Reasonable | 0/3 |
| | Comparative Example 2 | 448 | 89.6 | 400.0 | 2 | 50.2 | 41.9 | Unreasonable | 2/3 |
| | Example 12 | 384 | 76.8 | 400.0 | 2 | 36.9 | 41.9 | Reasonable | 0/3 |
| | Example 13 | 448 | 89.6 | 400.0 | 3 | 33.5 | 34.9 | Reasonable | 0/3 |
| | Comparative Example 3 | 448 | 134.4 | 400.0 | 3 | 50.2 | 34.9 | Unreasonable | 1/3 |
| Low/medium nickel | Example 14 | 257.52 | 64.4 | 400.0 | 1 | 41.4 | 105.3 | Reasonable | 0/3 |
| | Example 15 | 300.44 | 90.1 | 400.0 | 1 | 67.7 | 105.3 | Reasonable | 0/3 |
| | Comparative Example 4 | 343.36 | 103.0 | 350.0 | 1 | 101.1 | 90.4 | Unreasonable | 1/3 |
| | Comparative Example 5 | 343.36 | 103.0 | 350.0 | 1 | 101.1 | 90.4 | Unreasonable | 1/3 |
| | Example 16 | 300.44 | 90.1 | 400.0 | 1 | 67.7 | 75.6 | Reasonable | 0/3 |
| | Comparative Example 6 | 343.36 | 137.3 | 400.0 | 1 | 117.9 | 75.6 | Unreasonable | 2/3 |
| | Example 17 | 343.36 | 137.3 | 300.0 | 2 | 78.6 | 90.4 | Reasonable | 0/3 |
| | Example 18 | 386.28 | 193.1 | 300.0 | 3 | 82.9 | 90.4 | Reasonable | 0/3 |
| High nickel | Example 19 | 344.925 | 86.2 | 500.0 | 1 | 59.5 | 139.7 | Reasonable | 0/3 |
| | Example 20 | 394.2 | 138.0 | 500.0 | 1 | 108.8 | 139.7 | Reasonable | 0/3 |
| | Example 21 | 443.475 | 155.2 | 500.0 | 1 | 137.7 | 149.3 | Reasonable | 0/3 |
| | Comparative Example 7 | 443.475 | 177.4 | 500.0 | 1 | 157.3 | 149.3 | Unreasonable | 2/3 |
| | Example 22 | 443.475 | 155.2 | 600.0 | 1 | 114.7 | 139.7 | Reasonable | 0/3 |
| | Comparative Example 8 | 492.75 | 246.4 | 600.0 | 1 | 202.3 | 139.7 | Unreasonable | 1/3 |
| Sodium-ion battery | Example 23 | 119 | 17.9 | 120.0 | 1 | 17.7 | 50.6 | Reasonable | 0/3 |
| | Example 24 | 119 | 23.8 | 120.0 | 1 | 23.6 | 50.6 | Reasonable | 0/3 |
| | Example 25 | 119 | 17.9 | 120.0 | 1 | 17.7 | 35.6 | Reasonable | 0/3 |
| | Example 26 | 89.25 | 8.9 | 120.0 | 1 | 6.6 | 35.6 | Reasonable | 0/3 |
| | Comparative Example 9 | 119 | 17.9 | 120.0 | 1 | 17.7 | 12.7 | Unreasonable | 1/3 |
| | Comparative Example 10 | 148.75 | 29.8 | 120.0 | | 136.9 | 25.4 | Unreasonable | 1/3 |
| High nickel/silicon-doped | Comparative Example 11 | 616.56 | 277.5 | 600.0 | 1 | 285.1 | 119.1 | Unreasonable | 3/3 |
| | Example 27 | 554.904 | 166.5 | 800.0 | 1 | 115.5 | 119.1 | Reasonable | 0/3 |
| | Example 28 | 493.248 | 123.3 | 400.0 | 2 | 76.0 | 147.2 | Reasonable | 0/3 |
| | Example 29 | 493.248 | 222.0 | 400.0 | 2 | 136.9 | 147.2 | Reasonable | 0/3 |
| | Example 30 | 585.732 | 263.6 | 400.0 | 3 | 128.7 | 132.0 | Reasonable | 0/3 |
| | Example 31 | 431.592 | 215.8 | 400.0 | 2 | 116.4 | 132.0 | Reasonable | 0/3 |
| Lithium solid-state | Comparative Example 12 | 252.0 | 126.0 | 200.0 | 1 | 158.8 | 121.7 | Unreasonable | 1/3 |
| | Example 32 | 151.2 | 75.6 | 200.0 | 1 | 57.2 | 121.7 | Reasonable | 0/3 |
| | ^{.}Example 33 | 252.0 | 113.4 | 200.0 | 2 | 71.4 | 96.3 | Reasonable | 0/3 |
| | Example 34 | 201.6 | 50.4 | 300.0 | 1 | 33.9 | 96.3 | Reasonable | 0/3 |
| | Example 35 | 302.4 | 121.0 | 400.0 | 1 | 91.4 | 121.7 | Reasonable | 0/3 |
| | Example 36 | 302.4 | 45.4 | 400.0 | 1 | 34.3 | 121.7 | Reasonable | 0/3 |
| Lithium condensed state | Comparative Example 13 | 340.2 | 119.1 | 200.0 | 1 | 202.5 | 130.1 | Unreasonable | 2/3 |
| | Example 37 | 340.2 | 68.0 | 200.0 | 2 | 57.9 | 130.1 | Reasonable | 0/3 |
| | Example 38 | 243.0 | 97.2 | 300.0 | 1 | 78.7 | 130.1 | Reasonable | 0/3 |
| | Example 39 | 145.8 | 72.9 | 300.0 | 1 | 35.4 | 130.1 | Reasonable | 0/3 |
| | Example 40 | 243.0 | 85.1 | 200.0 | 1 | 103.3 | 149.3 | Reasonable | 0/3 |
| | Example 41 | 291.6 | 102.1 | 200.0 | 1 | 148.8 | 149.3 | Reasonable | 0/3 |
| | Example 42 | 340.2 | 119.1 | 200.0 | 2 | 101.3 | 130.1 | Reasonable | 0/3 |
| | Example 43 | 194.4 | 58.3 | 200.0 | 1 | 56.7 | 130.1 | Reasonable | 0/3 |

It can be seen from the battery parameters and test results of Examples 1 to 17 that, for batteries of different systems, different capacities, and different structures, in repeated thermal runaway tests, when the actual equivalent sectional area S of the pressure relief channel 30, the total area S₁ of the explosion-proof valves 40, the theoretical equivalent sectional area S₂ of the pressure relief channel 30, the quantity n of the explosion-proof valves 40, and the actual area S₀ of the explosion-proof valves 40 simultaneously satisfy: S ≥ (S₁S₂)/(nS₀), and nS₀ ≥ S₁, rupture of the battery under thermal runaway can be effectively avoided, and safety of the battery is improved; it can be seen from the battery parameters and test results of Comparative Examples 1 to 11 that, if the actual equivalent sectional area S of the pressure relief channel 30 cannot satisfy S ≥ (S₁S₂)/(nS₀), or the actual area S₀ of the explosion-proof valves 40 cannot satisfy nS₀ ≥ S₁, both can cause the problem of cracking of the housing 10 when the battery repeatedly undergoes thermal runaway.

The battery and the battery pack provided by embodiments of the present disclosure have been described in detail above. In the present disclosure, specific individual examples are applied to illustrate the principles and implementation manners of the present disclosure. The descriptions of the above embodiments are merely for facilitating understanding of the technical solutions and core ideas of the present disclosure. A person of ordinary skill in the art should understand that: the person can still modify the technical solutions described in the above embodiments, or perform equivalent replacement of some technical features; these modifications or replacements do not cause the essence of the corresponding technical solutions to depart from the scope of the technical solutions of the embodiments of the present disclosure.

## Claims

1. A battery, comprising:
a housing, wherein the housing comprises two first sidewalls, a second sidewall connecting the two first sidewalls, and a third sidewall connecting the two first sidewalls and the two second sidewalls; the first sidewalls, the second sidewall, and the third sidewall are enclosed to form an accommodating cavity; the second sidewall and/or the third sidewall is provided with explosion-proof holes, and the explosion-proof holes are in communication with the accommodating cavity;
an electrode assembly, wherein the electrode assembly is disposed in the accommodating cavity, the electrode assembly is spaced apart from the second sidewall and/or the third sidewall to form a pressure relief channel in the accommodating cavity; and
explosion-proof valves, wherein the explosion-proof valves are disposed on the second sidewall and/or the third sidewall,
wherein an actual equivalent sectional area S of the pressure relief channel satisfies: $S \geq \left({S}_{1}{S}_{2}\right) / \left({nS}_{0}\right) , and {nS}_{0} \geq {S}_{1} ,$
where S₁ is a total area of the explosion-proof valves, S₂ is a theoretical equivalent sectional area of the pressure relief channel, n is a quantity of the explosion-proof valves, and S₀ is an actual area of the explosion-proof valve.

2. The battery of claim 1, wherein the total area S₁ satisfies: S₁ = αCV,
where C is a rated capacity of the battery, V is a rated voltage of the battery, and α is an area coefficient of the explosion-proof valve.

3. The battery of claim 1, wherein the theoretical equivalent sectional area S₂ satisfies: S₂ = γS₁,
where γ is an area coefficient of the pressure relief channel.

4. The battery of claim 1, wherein the accommodating cavity has a length L, a width H, and a thickness T; and a total actual area of the explosion-proof valves satisfies: ${nS}_{0} < LT .$

5. The battery of claim 4, wherein the electrode assembly has a height h and a length l; and the actual equivalent sectional area S satisfies: $S = \left(HL-hl\right) T / \left(H+L\right) / 2 .$

6. The battery of claim 1, wherein the battery comprises a plurality of explosion-proof valves, and the plurality of explosion-proof valves are respectively disposed on the second sidewall and the third sidewall.

7. The battery of claim 1, wherein the explosion-proof valves are disposed at a center of the second sidewall.

8. The battery of claim 1, wherein the explosion-proof valves are symmetrically disposed on the second sidewall.

9. The battery of claim 1, wherein the explosion-proof valves are disposed at a center of the third sidewall.

10. The battery of claim 1, wherein the explosion-proof valves are symmetrically disposed on the third sidewall.

11. The battery of claim 2, wherein the area coefficient α satisfies: 0.3 ≤ α ≤ 1.

12. The battery of claim 3, wherein the equivalent sectional area coefficient γ satisfies: 0.1 ≤ γ ≤ 0.5.

13. A battery pack, comprising the battery of any one of claims 1 to 12.
